# FASCICULE DE BREVET EUROPEEN

(11) **EP 0 438 003 B1**
(45) Date de publication et mention de la délivrance du brevet: **09.03.1994**
(21) Numéro de dépôt: 90403802.3
(22) Date de dépôt: 28.12.1990
(51) Int. Cl.: F16H 21/44, E05C 9/18

(54) **Mécanisme transférant un déplacement d'une pièce à une autre et serrure le comprenant**
Hebelmechanismus zur Bewegungsübertragung und darin enthaltende Verriegelung
Swinging link mechanism and locking device with it

(30) Priorité: 05.01.1990 FR 9000083
(43) Date de publication de la demande: 24.07.1991
(73) Titulaire: Charles, Gérard, 75016 Paris (FR)
(72) Inventeur: Charles, Gérard, 75016 Paris (FR)
(74) Mandataire: Chevallier, Robert Marie Georges

(56) Documents cités:
- FR-A- 340 378
- FR-A- 2 091 071
- FR-A- 2 536 108
- GB-A- 286 515
- GB-A- 2 124 320
- GB-A- 2 218 729

## Description

L'invention a pour objet un dispositif mécanique de transformation d'un déplacement rectiligne alterné entre deux positions d'une première pièce, telle qu'une tige, en un déplacement rectiligne alterné entre deux positions extrêmes d'une seconde pièce disposée transversalement à la première pièce.

La disposition transversale mentionnée ci-dessus comprend la disposition strictement orthogonale de la première et de la deuxième pièce et, aussi, les dispositions relatives de ces pièces qui ne sont pas strictement orthogonales et qui sont appelées ici transversales.

On connaît déjà des mécanismes qui assurent la même fonction de transformation de mouvement. Le document FR-A-2 091 071 décrit un dispositif composé de deux leviers articulés entre eux et en plus d'une part avec un moyen d'actionnement à course rectiligne alternative, d'autre part avec une pièce à manoeuvrer le long d'une course rectiligne alternative. Selon ce document, le moyen d'actionnement et la pièce à manoeuvrer sont disposés à 90° l'un par rapport à l'autre et le mécanisme comprend un grand levier rectiligne articulé par ses extrémités respectivement avec le moyen d'actionnement et avec la pièce à manoeuvrer ; et un petit levier rectiligne articulé par une extrémité en un point fixe et par son autre extrémité avec le grand levier en un point de celui-ci intermédiaire de sa longueur. Ce mécanisme est relativement encombrant en soi et le débattement des leviers nécessite aussi un espace relativement grand.

Le document FR-A-340 378 décrit un dispositif de fermeture de portes servant à actionner simultanément plusieurs verrous parmi lesquels certains coulissent verticalement et d'autres c-oulissent horizontalement. A ces verrous correspondent respectivement une tige verticale et une tige horizontale et ces deux tiges sont attelées l'une à l'autre par un grand levier rectiligne articulé par ses extrémités respectivement avec une tige verticale et avec une tige horizontale, et par un petit levier rectiligne articulé par une extrémité avec la tige verticale et par son autre extrémité avec le grand levier en un point médian de la longueur de ce dernier.

Le document GB-A-286 515 décrit un dispositif pour la manoeuvre manuelle d'un verrou, se composant de deux leviers articulés dont l'un est un grand levier incurvé ayant une extrémité articulée avec le verrou et une extrémité libre facilement accessible à la main, dont l'autre est un petit levier rectiligne articulé par une extrémité en un point fixe et par son autre extrémité avec le grand levier en un point de celui-ci intermédiaire de sa longueur.

Le but principal de l'invention est de parvenir à un dispositif du genre défini ci-dessus ayant en plus une propriété de modification de la course de la seconde pièce par rapport à la course de la première pièce, avec un encombrement général réduit de façon que ce dispositif puisse être utilisé, entre autres utilisations diverses, dans une serrure pour la manoeuvre d'un pêne ou de plusieurs pênes de cette serrure à partir d'une première pièce, le pêne ou les pênes étant alors la seconde pièce désignée plus haut.

Un but secondaire de l'invention est de perfectionner le dispositif en question pour que, quand la seconde pièce a été mise à une position déterminée par un déplacement de la première pièce, cette seconde pièce soit fermement bloquée à cette position déterminée ; autrement dit, le dispositif a alors une qualité d'irréversibilité totale quand la seconde pièce a été mise à une position déterminée, de sorte que toute force appliquée alors directement à cette seconde pièce ne permet pas de la déplacer de cette position déterminée à laquelle elle a été mise.

Un autre but de l'invention est de parvenir à un dispositif du genre défini ci-dessus ayant en plus une propriété de modification de la course de la seconde pièce par rapport à la course de la première pièce, avec un encombrement général réduit de façon que ce dispositif puisse être utilisé, entre autres utilisations diverses, dans une serrure pour la manoeuvre d'un pène ou de plusieurs pènes de cette serrure à partir d'une première pièce, le pène ou les pènes étant alors la seconde pièce désignée plus haut.

Un dispositif conforme à l'invention, monté entre une première pièce coulissante, appelée aussi tige de commande, capable d'un déplacement rectiligne alterné entre deux positions extrêmes et une seconde pièce coulissante disposée transversalement à la première pièce et capable d'un déplacement rectiligne alterné entre une première position et une seconde position, comprend trois leviers qui ont chacun deux extrémités opposées munies chacune d'un axe d'articulation :
- le premier levier est articulé par une première extrémité sur la tige de commande, et par une seconde extrémité avec une première extrémité du deuxième levier,
- un deuxième levier est un levier coudé en un point intermédiaire de sa longueur constituant un sommet à partir duquel s'étendent deux branches faisant entre elles un angle obtus supérieur à 90° et inférieur à 180°, une extrémité d'une branche de ce deuxième levier étant articulée avec la seconde extrémité du premier levier, l'autre extrémité de la seconde branche étant articulée sur la seconde pièce, le point étant articulé avec une première extrémité du troisième levier,
- un troisième levier est articulé par une première extrémité avec le point du deuxième levier et sa seconde extrémité est articulée sur un point fixe extérieur à la première et à la seconde pièce, ce troisième levier se trouvant dans ledit angle obtus quand la seconde pièce est à sa première position extrême et étant en arrière de l'articulation du deuxième levier avec la seconde pièce par rapport au sens du déplacement de cette seconde pièce de sa première position extrême à sa seconde position extrême.

La manoeuvre du premier levier peut être faite directement par la première pièce ou indirectement par un quatrième levier à deux branches par rapport à un point d'articulation de pivotement, permettant ainsi l'adaptation de la course de la première pièce à la course désirée de la seconde pièce entre les positions extrêmes de ces pièces.

L'invention sera mieux comprise à la lecture de l'explication plus détaillée qui sera donnée maintenant, uniquement à titre d'exemple, d'une représentation schématique du dispositif et d'un mode de réalisation de ce dernier ainsi que d'un exemple d'utilisation de ce dispositif dans une serrure à commande double, mécanique et électrique.

On se reportera aux dessins annexés dans lesquels :
- la figure 1 est une représentation schématique d'un dispositif à trois leviers conformes à l'invention, représenté avec la seconde pièce située à sa première position,
- la figure 2 est une vue analogue à la figure 1 mais la seconde pièce a été déplacée à sa seconde position à l'aide du dispositif de l'invention,
- les figures 3 et 4 sont des vues qui correspondent respectivement aux figures 1 et 2 et qui montrent un dispositif réel interposé entre une première pièce représentée partiellement et une seconde pièce représentée en totalité,
- la figure 5 est une vue de côté dans le sens de la flèche F de la figure 3, montrant principalement les trois leviers du dispositif,
- la figure 6 est une vue générale de côté d'une serrure équipée du dispositif de l'invention pour la manoeuvre du pène de cette serrure qui est à double commande, électrique et mécanique, le pène étant à sa position rentrée de repos,
- la figure 7 est une vue analogue à la figure 6 avec le pène mis à sa position sortie de condamnation d'une porte,
- la figure 8 est une vue de dessus de la même serrure.

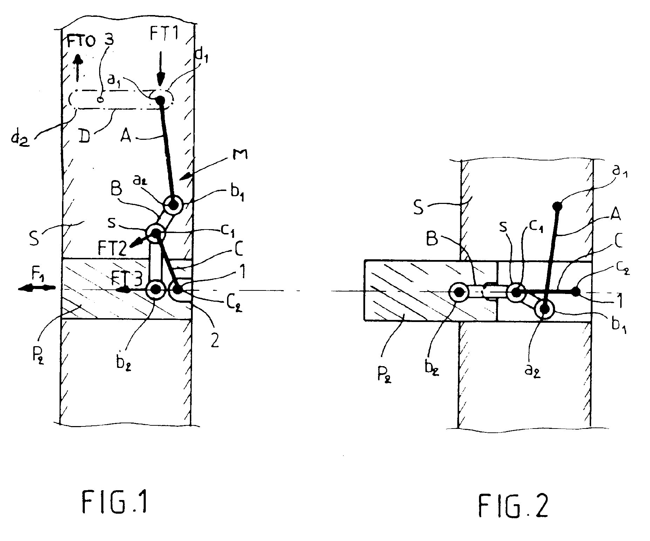

On se réfèrera d'abord aux figures 1 et 2 qui, étant simplifiées, permettent d'expliquer et de comprendre plus facilement la constitution du dispositif de l'invention. Sur ces figures 1 et 2 est représenté schématiquement un support général 8 qui peut être une pièce quelconque sur laquelle est monté le dispositif ; ce dernier est désigné dans son ensemble par la référence générale M.

Le dispositif M sert à transmettre à une seconde pièce P2 qui est, par exemple, guidée en coulissement dans le support S, un mouvement en sens alternés dans des directions opposées indiquées par une flèche double F1. Ce mouvement est dérivé de celui d'une première pièce qui n'est pas représentée sur les figures 1 et 2 pour une raison qui sera expliquée plus loin.

Le dispositif M comprend un premier levier A qui a une première extrémité a1 et une seconde extrémité a2 ; ce levier A est disposé, dans l'ensemble, dans une direction orthogonale à la direction F1 des mouvements de la seconde pièce P2.

Un deuxième levier B est un levier coudé à deux branches, faisant un angle obtus de 135° dans cet exemple de réalisation, en partant d'un sommet s et se terminant par une première extrémité et une seconde extrémité b₂.

Le coude du deuxième levier B est avantageux en ce sens qu'il favorise la compacité du mécanisme, notamment dans le sens de la réduction de son encombrement en largeur transversalement aux sens alternés d'action d'une tige de manoeuvre agissant selon FT1 ou FT0 sur la figure 1.

Un troisième levier C a une première extrémité c1 et une seconde extrémité c2.

Ces trois leviers A, B, C sont articulés, par exemple à l'aide d'axes arrêtés en sens axial par deux rondelles élastiques, de la façon suivante :
- la seconde extrémité a2 du premier levier A est articulée avec la première extrémité b1 du second levier B,
- la première extrémité c1 du troisième levier C est articulée sur le sommet s du deuxième levier B,
- la deuxième extrémité b2 du deuxième levier B est articulée sur la seconde pièce P2, de préférence, mais pas nécessairement, dans le plan médian longitudinal s'étendant dans la direction F1 des mouvements de cette pièce P2,
- la deuxième extrémité c2 du troisième levier est articulée sur un point fixe 1 qui se trouve sur le support général S. Ce point fixe 1 d'articulation est choisi à proximité de la seconde pièce P2 et, de préférence, à proximité de l'articulation de la seconde extrémité b2 sur la seconde pièce P2, mais, dans tous les cas, en amont ou en arrière de cette seconde extrémité b2 dans le sens de déplacement de la seconde pièce P2 d'une première position extrême jusqu'à une seconde position extrême. Cette condition est satisfaisante sur la figure 1 où la seconde pièce P2 est représentée à une première position extrême à laquelle elle est contenue entièrement dans une glissière ménagée dans le support général S pour la recevoir.

La position du point fixe 1 d'articulation est choisie, dans le présent exemple, tellement proche de la seconde extrémité articulée b2 qu'une encoche 2 a été ménagée à l'extrémité arrière de la seconde pièce P2 pour qu'un axe d'articulation (non visible sur les figures 1,2) puisse traverser la seconde extrémité c2 pour être reçu dans les trous correspondants prévus dans le support général S pour contenir cet axe et le guider en rotation. Cette disposition est favorable à la compacité du dispositif M. Dans d'autres circonstances où la nécessité d'un encombrement réduit serait moins forte, le point fixe 1 d'articulation pourrait être plus éloigné de la seconde extrémité b2 du second levier B et de la seconde pièce P2 quand celle-ci occupe sa première position extrême.

Quand la seconde pièce P2 se trouve à sa première position extrême, la seconde branche du levier B entre son sommet s et sa seconde extrémité b2 est substantiellement perpendiculaire à cette seconde pièce P2. Du fait de l'angle de 135° entre les deux branches du deuxième levier B, la seconde branche située entre le sommet s et la première extrémité b1 est inclinée de 45° environ par rapport à la direction F1 de déplacement de la seconde pièce P2.

La première extrémité a1 du premier levier A étant articulée avec l'extrémité b1 de la seconde branche définie plus haut du deuxième levier B (dans l'état décrit ci-dessus du dispositif), ce premier levier A est incliné, par exemple d'un angle de 15° à 20° par rapport à la direction de la seconde branche. Cet angle varie, dans une mesure limitée, en fonction de la longueur du premier levier A.

Avec la disposition décrite ci-dessus, les trois points constitués par les articulations du sommet s, des extrémités b2 et c2 sont les sommets d'un triangle rectangle ou peu différent d'un triangle rectangle.

A partir de l'état du dispositif visible sur la figure 1, quand une force FT1 est appliquée dans une direction orthogonale à la direction F1 de déplacement de la seconde pièce P2, sur la première extrémité a1 du premier levier A, cette force FT1 est reportée sur le second levier B et se traduit finalement par une force FT2, agissant au sommet s et agissant donc aussi sur la première extrémité C1 du troisième levier C. Cette force FT2 agit sur le troisième levier C dans une direction qui oblige ce levier C à tourner en sens anti-horaire quand on regarde la figure 1, autour du point fixe 1. En même temps, le deuxième levier B tend à pivoter sous l'action du premier levier A autour de l'articulation de son sommet s, ce qui fait apparaître à sa seconde extrémité b2 articulée sur la seconde pièce P2 une force FT3 qui pousse cette seconde pièce P2 dans un sens qui l'éloigne du point fixe 1.

La figure 2 montre l'état du dispositif M après achèvement des mouvements expliqués ci-dessus. Le triangle s, b2, c2 défini plus haut est "mis à plat" par suite de l'écartement des sommes b2 et c2 et de l'ouverture, jusqu'à atteindre 180° de l'angle du sommet s. De ce fait, la seconde pièce P2 a coulissé dans le support général S sur une course qui est égale à l'augmentation du nouvel écartement des articulations b2, c2. La première extrémité a1 du premier levier A s'est rapprochée de la seconde pièce P2 d'une distance qui correspond au mouvement du deuxième levier B.

Dans l'exemple décrit ici des figures 1 et 2, au début du mouvement (fig. 1) les articulations de la seconde extrémité b2 du deuxième levier B sur la seconde pièce P2 et de la seconde extrémité c2 du troisième levier C autour du point fixe 1 se trouvaient sur une ligne droite parallèle à la direction F1 de déplacement de la seconde pièce P2. En conséquence, à la fin du mouvement (figure 2) les trois sommets b2, s, c2 sont en alignement et le troisième levier C se trouve exactement dans le prolongement de la branche du deuxième levier comprise entre la seconde extrémité b2 et le sommet s. La seconde pièce P2 occupe alors sa seconde position à laquelle elle est tenue bloquée par les pièces en prolongement décrites ci-dessus. Dans cet état le dispositif est irréversible. Il n'est pas possible de déplacer la seconde pièce P2 pour la remettre à sa première position en agissant directement sur elle.

Le blocage décrit ci-dessus de la seconde pièce P2 à sa seconde position n'est pas nécessaire ou n'est pas souhaitable dans toutes les circonstances d'utilisation du dispositif M. Il est donc possible d'articuler la seconde extrémité c2 du troisième levier C autour d'un point fixe 1 qui ne se trouve pas sur une ligne parallèle à la direction F1 et passant par l'articulation de l'extrémité b2 sur la seconde pièce P2. Dans ce cas, l'angle du sommet s mentionné plus haut n'a pas la valeur de 180° quand la seconde pièce P2 est à sa seconde position et le dispositif cesse d'être irréversible.

De même, il est compréhensible que la force FT1 ne doit pas nécessairement être orthogonale à la direction F1 des mouvements de la seconde pièce P2 pour que le dispositif fonctionne. Il est possible que la force FT1 s'exerce sur l'extrémité a1 du premier levier A dans une direction oblique par rapport à la direction F1. D'une façon plus générale, la force FT1 peut donc être une force transversale à la direction F1 ; son degré d'obliquité est acceptable tant que la force FT1 se traduit par une force FT2 qui fait tourner le troisième levier C dans le sens convenable autour du point fixe 1.

Toutefois, la disposition orthogonale exacte de la force FT1 et de la direction F1 (ou une disposition qui en diffère peu) a un intérêt particulier que l'on fera ressortir plus loin.

Le dispositif M des figures 1 et 2 étant irréversible comme on l'a expliqué, la remise à l'état de la figure 1 se fait uniquement par l'application sur l'extrémité a1 du premier levier A d'une force agissant en sens opposé à celui de la force FT1.

Le dispositif décrit jusqu'à présent peut être perfectionné par l'adjonction d'un quatrième levier D représenté en trait mixte sur la figure 1 seulement. Ce levier D a une première extrémité d1 par laquelle il est articulé avec la première extrémité a1 du premier levier A et une seconde extrémité d2 par laquelle il peut être manoeuvré pour pivoter autour d'un pivot 3 situé entre ses deux extrémités d1, d2, et supporté, par exemple, par le support général S.

Ce quatrième levier D est disposé transversalement dans l'ensemble au premier levier A et le pivot 3 est placé à l'endroit voulu pour réaliser l'adaptation de la course de l'extrémité a1 du premier levier A (quand la seconde pièce P2 est déplacée d'une première position extrême à sa seconde position extrême) à la course d'une force FT0 appliquée à la seconde extrémité d2 du quatrième levier D.

Il existe en effet des circonstances où une force FT0 disponible pour manoeuvrer le dispositif D ne peut avoir qu'une course de valeur imposée, excessive ou insuffisante par rapport à la course de l'extrémité a1, qui est elle-même liée à la course souhaitée de la seconde pièce P2.

Quand la course de la force FT0 est celle d'une première pièce, le quatrième levier D permet d'obtenir la course désirée de la seconde pièce P2 quelle que soit la course de la première pièce.

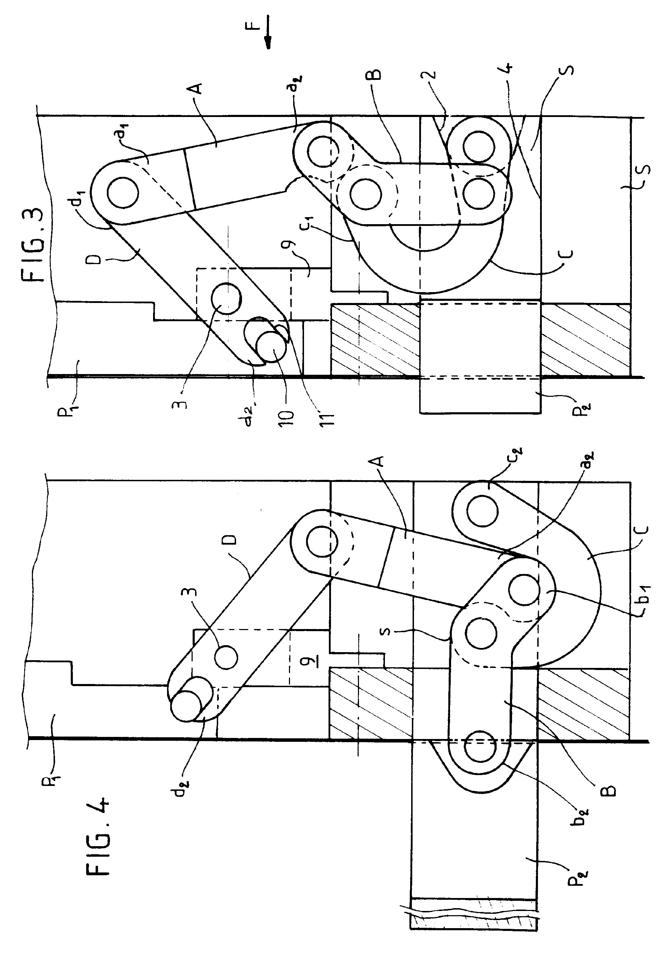

Les figures 3 à 5 se rapportent à un exemple réel de réalisation du dispositif M de l'invention dans lequel le quatrième levier D est utilisé pour multiplier la course de la première pièce et donner une course plus grande à la seconde pièce.

On ne décrira pas à nouveau en détail le dispositif de l'invention, on se contentera de faire ressortir les particularités de la réalisation en comparaison de l'exemple schématique des figures 1 et 2.

Le premier levier A est rectiligne avec une fourche à sa première extrémité a1 pour contenir la première extrémité d1 du quatrième levier D.

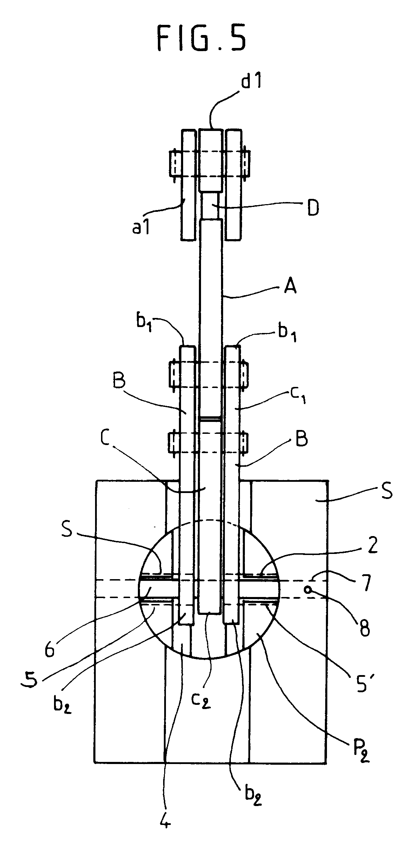

Le deuxième levier B, coudé, est composé de deux leviers plats identiques et parallèles qui contiennent entre eux la première extrémité c1 du troisième levier C ; chacun des deux leviers B est introduit par sa seconde extrémité b2 dans un évidement 4 assez large prévu dans la seconde pièce P2 à partir de l'extrémité arrière de celle-ci où se trouve aussi l'encoche 2 ; chaque extrémité b2 est articulée sur la seconde pièce P2 à l'aide d'un axe respectif 5, 5' représenté en trait interrompu sur la figure 5 ; ainsi l'articulation du deuxième levier B est réalisée à l'aide de deux demi-axes qui ne traversent pas la seconde pièce P2.

Le troisième levier C est incurvé sensiblement en demi-cercle dans le même plan dans l'ensemble que les leviers A, B ; il se développe entre les deux leviers parallèles B et s'engage aussi dans l'évidement 4 pour parvenir jusqu'à l'encoche 2 où sa seconde extrémité c2 est traversée librement par un axe 6 (figure 5). Cet axe 6 s'étend hors de l'encoche 2 et il est contenu dans deux trous 7 en prolongement du support général S dans lequel la seconde pièce P2 est guidée en coulissement. Une vis 8 immobilise l'axe 6 dans le support général S.

Les figures 3 et 4 montrent aussi que le support général S possède une chape 9 qui lui est rapportée et fixée pour pouvoir porter l'axe 3 du quatrième levier D. En outre, le support général S est prolongé par une partie qui s'étend dans le sens longitudinal du premier levier A et qui sert à guider en coulissement une première pièce P1. Cette pièce P1 est en fait une tige qui est disposée dans le support général S perpendiculairement à la seconde pièce P2.

La première pièce P1 porte un ergot 10. Le quatrième levier D est engagé dans les deux branches de la chape 9 où il est monté libre en pivotement autour de l'axe 3 et sa seconde extrémité d2 a une fente allongée 11, ouverte sur l'extérieur, dans laquelle est engagé l'ergot 10. Ce dernier est libre en coulissement dans la fente allongée 11 et il déplace le quatrième levier D entre deux positions extrêmes quand la tige qui constitue ici la première pièce P1 est elle-même déplacée par coulissement dans le sens de sa longueur, entre deux positions extrêmes. Ces positions extrêmes sont visibles respectivement sur la figure 3 et sur la figure 4.

Quand la seconde pièce P2 occupe sa seconde position extrême (figure 4) où elle est fortement saillante en dehors du support général S la forme incurvée du troisième levier C permet à ce dernier de recevoir dans sa concavité la branche du deuxième levier B située entre le sommet s de ce levier B et sa première extrémité b1, en même temps que la seconde extrémité a2 du premier levier A. Cette disposition est nécessaire quand il est désiré que les articulations b2, s, c2 se trouvent en alignement, comme expliqué précédemment, afin que le dispositif soit irréversible, avec le plus faible encombrement possible.

Il est entendu à cet égard, que la représentation schématique de la figure 2, simplifiée pour faciliter l'explication et la compréhension des mouvements, n'est pas réalisable avec des leviers qui seraient tous rectilignes dans le même plan - quand les premier, deuxième et aussi quatrième leviers A, B, D sont dans un même plan ou dans des plans parallèles voisins, le troisième levier C ne peut être rectiligne. Les figures 3 et 4 montrent comment le troisième levier C est avantageusement incurvé entre ses extrémités articulées, pour une plus grande compacité du dispositif.

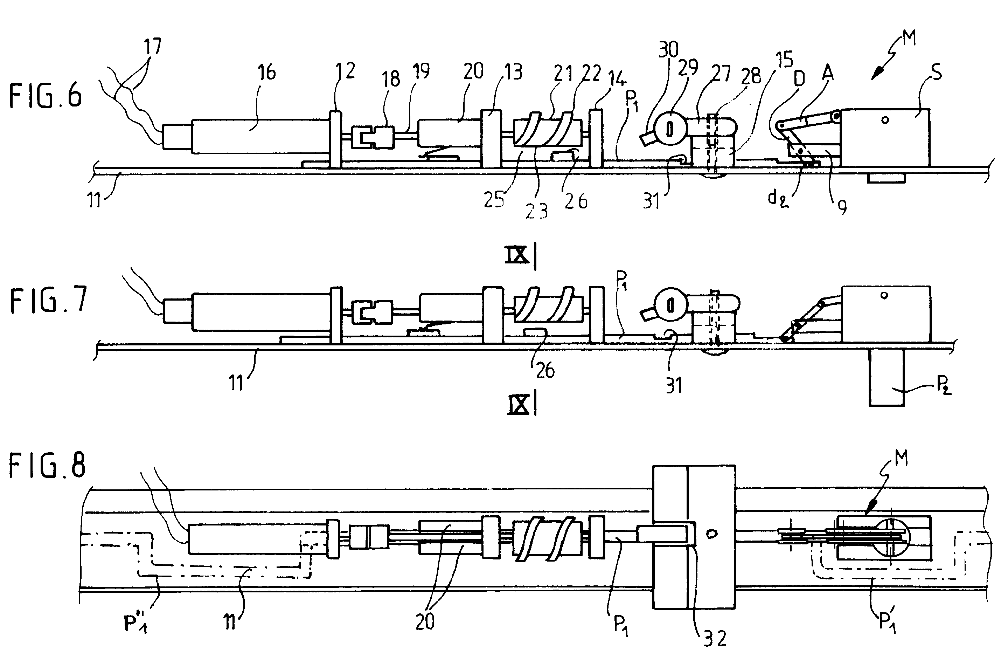

Les figures 6 à 8 se rapportent à un exemple d'utilisation pratique du dispositif de l'invention permettant de réaliser une serrure à double commande électrique et mécanique.

L'ensemble des pièces de la serrure est installé dans un profilé disponible dans le commerce, allongé, en deux parties dont une seule partie 11 est représentée. Cette partie 11 sert à porter les pièces qui y sont fixées, l'autre partie est analogue à un capot qui enferme ces pièces. Le profilé allongé est conçu pour être fixé à un mur ou à une cloison le long d'une ouverture pouvant être obturée par un panneau mobile. Ce dernier, du genre d'une porte par exemple, peut être verrouillé en position de fermeture par au moins un pène qui est la seconde pièce P2 des figures précédentes.

Ce pène, ou seconde pièce P2, est manoeuvré au moyen d'un dispositif M de l'invention à partir d'une tige coulissante qui est la première pièce P1 des figures 3,4. Cette pièce P1 est montée coulissante dans la partie 11 du profilé ; elle est guidée dans son mouvement par plusieurs pontets transversaux 12, 13, 14, 15. Ces derniers sont échancrés pour contenir librement la première pièce P1 et sont fixés par des vis à la partie 11 du profilé.

La première pièce P1 agit par l'intermédiaire d'un quatrième levier D porté par une chape 9 de la même façon que sur les figures 3 et 4.

Les pontets transversaux 12, 13, 14, 15 servent au montage et/ou à la fixation de diverses pièces dont le rôle est de déplacer comme on le désire la première pièce P1 entre deux positions extrêmes auxquelles correspondent les deux positions extrêmes de rentrée totale et de sortie totale de la seconde pièce ou pène P2.

Il est à remarquer que la tige ou première pièce P1 est placée dans une direction exactement perpendiculaire à la direction du pène ou seconde pièce P2. En outre, le volume disponible à l'intérieur du profilé fermé est naturellement limité en épaisseur et en largeur, d'où l'avantage important qu'apporte le dispositif M pour transmettre les mouvements de la première pièce à la seconde pièce.

La serrure des figures 6 à 8 comprend un groupe moto-réducteur électrique 16 supporté en porte-à-faux par le pontet 12 et pouvant être alimenté en courant électrique par des fils électriques 17 qui sortent du profilé.

L'arbre du groupe moto-réducteur 16 traverse le pontet 12 et il est accouplé par un accouplement flexible 18 à un arbre 19 qui passe entre deux micro-interrupteurs 20, qui traverse le pontet 13 par lequel il est soutenu, et qui porte une pièce 21 à filet hélicoïdal 22. Cette pièce est supportée aussi par un arbre qui s'engage dans le pontet 14.

La pièce 21 est cylindrique dans l'ensemble avec un méplat 23 qui s'étend sur toute sa longueur dépourvu de filet hélicoïdal. Quand la pièce 21 a été immobilisée de façon que le méplat 23 se trouve en regard de la première pièce P1, il existe entre ces deux pièces un espace libre 25. Dans cet espace 25, la première pièce P1 est pourvue d'un bouton de manoeuvre 26 conçu et disposé pour pouvoir coopérer avec le filet hélicoïdal 22 quand la pièce 21 est entraînée en rotation par le groupe moto-réducteur électrique 16. Ainsi, ce dernier est capable, en tournant, de déplacer le bouton 26 et la première pièce P1 entre deux positions extrêmes qui sont les positions extrêmes mêmes définies plus haut de la première pièce P1. A chacune de ces positions extrêmes, le méplat 23 est en face de la première pièce P1 et le bouton 26 est dégagé du filet hélicoïdal 22.

Les micro-interrupteurs 20 sont disposés en correspondance avec les positions extrêmes de la première pièce P1, pour détecter ces positions et provoquer l'arrêt au moment voulu du groupe moto-réducteur 16.

La première pièce P1 est pourvue, en liaison avec la partie 11 du profilé, d'un moyen de freinage en position (non représenté), tel qu'une bille poussée par un ressort et engagée partiellement dans un logement correspondant à chacune desdites positions extrêmes.

Le pontet 15 porte le corps 27 fixé à l'aide de vis 28 d'une serrure à cylindre 29 manoeuvrable en rotation à l'aide d'une clé (non représentée). La rotation du cylindre 29 entraîne le déplacement en rotation d'un panneton 30. En correspondance avec la course circulaire et la situation de ce panneton 30 il existe dans la première pièce P1 une encoche 31 dans laquelle le panneton 30 peut s'engager partiellement pendant sa rotation et, alors, provoquer le coulissement en sens longitudinal de la première pièce P1.

La disposition de la serrure 29 est telle que le panneton 30 peut s'engager dans l'encoche 31 à chacune des positions extrêmes de la première pièce P1 et déplacer celle-ci jusqu'à son autre position extrême.

En dehors des moments d'utilisation de la serrure 29 le panneton 30 est dégagé de l'encoche 31 ; il se trouve à la position de retrait de la clé hors de la serrure dans un évidement 32 prévu à cette fin dans le corps 27 ainsi qu'il est habituel.

Il ressort de la description donnée ci-dessus que la première pièce P1 est désaccouplée totalement des deux moyens qui permettent de la déplacer entre ses deux positions extrêmes, c'est-à-dire d'une part du groupe motoréducteur électrique 16 et de la pièce 21 avec son filet hélicoïdal 22, d'autre part de la serrure à clé 29 avec son panneton 30.

De cette façon, il est toujours possible à tout moment, de manoeuvrer la première pièce P1, soit électriquement à l'aide du groupe moto-réducteur électrique 16 à partir d'un clavier à code secret, par exemple, soit mécaniquement à l'aide de la clé de la serrure 29.

Les mouvements de la première pièce P1 sont transmis par le dispositif M à la seconde pièce P2 qui est le pène de la serrure à double commande électrique/mécanique qui vient d'être décrite.

Sur les figures 6 à 8, la première pièce P1 est interrompue après son articulation en d2 avec le quatrième levier D. Mais il est possible, comme indiqué en trait mixte sur la figure 8, de prévoir un prolongement P1' de la première pièce P1, ce prolongement contournant le dispositif et s'étendant le long de la partie 11 du profilé jusqu'à un ou plusieurs autres dispositifs M ayant chacun une seconde pièce P2 servant de pène. Plusieurs pènes espacés sont donc manoeuvrables simultanément à partir de chacun des deux moyens de manoeuvre électrique 16 et mécanique 29. Le prolongement peut être prévu aussi en sens inverse, c'est-à-dire du côté du groupe moto-réducteur 16 ; un tel prolongement est indiqué par un tracé en trait mixte P''1 sur la figure 8 pour la manoeuvre d'autres pènes.

## Revendications

1. Dispositif de transformation d'un mouvement rectiligne alterné d'une première pièce (P1) en mouvement rectiligne alterné d'une seconde pièce (P2) disposée transversalement à la première pièce (P1), entre deux positions extrêmes de chacune de ces pièces, comprenant trois leviers qui ont chacun deux extrémités opposées munies chacune d'un axe d'articulation,
- un premier levier (A) est articulé par une première extrémité (a1) sur la première pièce (P1) et par sa seconde extrémité (a2) avec une première extrémité (b1) d'un deuxième levier (B),
- un deuxième levier (B) est un levier coudé en un point intermédiaire (s) de sa longueur constituant un sommet à partir duquel s'étendent deux branches faisant entre elles un angle obtus supérieur à 90° et inférieur à 180°, une extrémité (b1) d'une branche de ce deuxième levier (B) étant articulée avec la seconde extrémité (a2) du premier levier (A), l'autre extrémité (b2) de la seconde branche étant articulée sur la seconde pièce (P2), le point (s) étant articulé avec une première extrémité (C1) du troisième levier (C),
- un troisième levier (C) est articulé par une première extrémité (c1) avec le point (s) du deuxième levier (B) et sa seconde extrémité (c2) est articulée sur un point fixe (1) extérieur à la première et à la seconde pièce (P1, P2), ce troisième levier (C) se trouvant dans ledit angle obtus quand la seconde pièce (P2) est à sa première position extrême et étant en arrière de l'articulation du deuxième levier (B) avec la seconde pièce (P2) par rapport au sens du déplacement de cette seconde pièce (P2) de sa première position extrême à sa seconde position extrême.

2. Dispositif selon la revendication 1, caractérisé en ce que la branche du deuxième levier (B) comprise entre la seconde extrémité (b2) et le point intermédiaire-sommet (s) de ce levier est disposée perpendiculairement à la seconde pièce (P2) quand celle-ci est à sa première position extrême.

3. Dispositif selon l'une quelconque des revendications 1, 2, caractérisé en ce qu'un quatrième levier (D) est monté entre la première pièce (P1) et le premier levier (A), ce quatrième levier (D) ayant deux branches par rapport à un point d'articulation de pivotement, permettant ainsi l'adaptation de la course de la première pièce (P1) à la course de la seconde pièce (P2) entre leurs positions extrêmes.

4. Dispositif selon l'une quelconque des revendications 1 à 3, caractérisé en ce que les premier et deuxième leviers (A, B) sont dans un même plan ou des plans parallèles voisins et le troisième levier (C) est incurvé en demi-cercle dans l'ensemble entre ses deux extrémités articulées.

5. Dispositif selon la revendication 4, caractérisé en ce que le troisième levier (C) est incurvé dans le même plan que le plan des premier et deuxième leviers (A, B) ou dans un plan parallèle voisin.

6. Dispositif selon la revendication 1, caractérisé en ce que le troisième levier (C) est incurvé en demi-cercle entre ses deux extrémités articulées dans un plan qui contient sensiblement les premier et deuxième leviers (A, B), l'incurvation de ce levier (C) étant choisie pour que ce dernier contienne dans sa concavité la branche du deuxième levier (B) située entre le sommet (s) et la première extrémité (b1) de ce levier (B) en même temps que la seconde extrémité (a2) du premier levier (A) quand la seconde pièce (P2) est à sa seconde position extrême.

7. Utilisation du dispositif selon l'une quelconque des revendications 1 à 6, dans une serrure entre une tige de commande constituant la première pièce (P1) et au moins un pêne constituant la seconde pièce (P2).

8. Serrure à commande électrique et mécanique d'un pêne au moins caractérisée en ce qu'elle comprend au moins un dispositif selon l'une quelconque des revendications 1 à 6, entre une tige de commande constituant une première pièce (P1) et un pêne constituant une seconde pièce (P2), comprenant en plus un groupe moto-réducteur (16) accouplé en rotation avec une pièce (21) ayant un filet hélicoïdal (22) à sa périphérie et un méplat (23), cette pièce (21) étant disposée au-dessus de la première pièce (P1) dans une région de celle-ci pourvue d'un bouton de manoeuvre (26) dégagé de ladite pièce (21) en regard du méplat (23) et coopérant avec le filet hélicoïdal (22) pendant la rotation de ladite pièce (21), comprenant aussi une serrure à clé (29) avec un panneton (30) disposée au-dessus de la première pièce (P1) dans une région de celle-ci pourvue d'un encoche (31) coopérant avec le panneton (30) pendant une fraction de la rotation de ce dernier, l'un et l'autre du filet hélicoïdal (22) et du panneton (30) déplaçant pendant leur rotation la première pièce (P1) entre l'une et l'autre des deux positions extrêmes de cette dernière.

## Patentansprüche

1. Vorrichtung zur Umwandlung einer geradlinigen Hin- und Herbewegung eines ersten Teiles (P1) in eine geradlinige Hin- und Herbewegung eines zweiten Teiles (P2), das quer zum ersten Teil (P1) angeordnet ist, wobei die Hin- und Herbewegung jedes der Teile zwischen zwei Endstellungen erfolgt, umfassend drei Hebel, an deren einander entgegengesetzten Enden jeweils eine Gelenkachse vorgesehen ist, wobei
ein erster Hebel (A) mit einem ersten Ende (a1) an dem ersten Teil (P1) und mit seinem zweiten Ende (a2) an einem ersten Ende (b1) eines zweiten Hebels (B) angelenkt ist,
ein zweiter Hebel (B) als Winkelhebel in einem mittleren Punkt (s) seiner Länge gekrümmt ist, der einen Scheitelpunkt darstellt, von dem ausgehend sich zwei einen stumpfen Winkel von mehr als 90° und weniger als 180° zwischen sich einschließende Arme erstrecken, wobei ein Ende (b1) eines Armes dieses zweiten Hebels (B) an dem zweiten Ende (a2) des ersten Hebels (A) angelenkt ist, das andere Ende (b2) des zweiten Armes an dem zweiten Teil (P2) angelenkt ist und der Punkt (s) mit einem ersten Ende (c1) des dritten Hebels (C) gelenkig verbunden ist,
ein dritter Hebel (C) mit einem ersten Ende (c1) an dem Punkt (s) des zweiten Hebels (B) angelenkt ist und sein zweites Ende (c2) an einem feststehenden Punkt (1) außerhalb des ersten und zweiten Teiles (P1, P2) angelenkt ist, wobei sich dieser dritte Hebel (C) in dem genannten stumpfen Winkel befindet, wenn das zweite Teil (P2) seine erste Endstellung einnimmt, und bezüglich der Bewegungsrichtung dieses zweiten Teiles (P2) von seiner ersten Endstellung in seine zweite Endstellung hinter dem Gelenk liegt, welches den zweiten Hebel (B) mit dem zweiten Teil (P2) verbindet.

2. Vorrichtung nach Anspruch 1, dadurch **gekennzeichnet,** daß der Arm des zweiten Hebles (B) zwischen dem zweiten Ende (b2) und dem mittleren Scheitelpunkt (s) dieses Hebels senkrecht zum zweiten Teil (P2) angeordnet ist, wenn dieses sich in seiner ersten Endstellung befindet.

3. Vorrichtung nach Anspruch 1 oder 2, dadurch **gekennzeich****net,** daß ein vierter Hebel (D) zwischen dem ersten Teil (P1) und dem ersten Hebel (A) montiert ist, wobei der vierte Hebel (D) zwei Arme bezüglich eines Schwenkpunktes hat, wodurch die Bewegungsstrecke des ersten Teiles (P1) an die Bewegungsstrecke des zweiten Teiles (P2) zwischen ihren jeweiligen Endstellungen angepaßt werden kann.

4. Vorrichtung nach einem der Ansprüche 1 bis 3, dadurch **ge****kennzeichnet,** daß der erste Hebel und der zweite Hebel (A, B) in einer selben Ebene oder in einander benachbarten parallelen Ebenen angeordnet sind und daß der dritte Hebel (C) halbkreisförmig in der Anordnung zwischen seinen beiden Gelenkenden gekrümmt ist.

5. Vorrichtung nach Anspruch 4, dadurch **gekennzeichnet,** daß der dritte Hebel (C) in der Ebene des ersten und des zweiten Hebels (A, B) oder in einer benachbarten parallelen Ebene gekrümmt ist.

6. Vorrichtung nach Anspruch 1, dadurch **gekennzeichnet,** daß der dritte Hebel (C) halbkreisförmig zwischen seinen beiden Gelenkenden in einer Ebene gekrümmt ist, die im wesentlichen den ersten und den zweiten Hebel (A, B) enthält, wobei die Krümmung dieses Hebels (C) so gewählt ist, daß letzterer in seinem konkaven Bereich den zwischen dem Scheitelpunkt (s) und dem ersten Ende (b1) des zweiten Hebels (B) sich erstreckenden Arm des zweiten Hebels (B) zusammen mit dem zweiten Ende (a2) des ersten Hebels (A) aufnimmt, wenn das zweite Teil (P2) sich in seiner zweiten Endstellung befindet.

7. Verwendung der Vorrichtung nach einem der Ansprüche 1 bis 6 in einem Schloß zwischen einer das erste Teil (P1) darstellenden Steuerstange und mindestens einem das zweite Teil (P2) darstellenden Riegel.

8. Schloß mit elektromechanischer Steuerung mindestens eines Riegels, dadurch **gekennzeichnet,** daß es mindestens eine Vorrichtung nach einem der Ansprüche 1 bis 6 zwischen einer ein erstes Teil (P1) darstellenden Steuerstange und einem ein zweites Teil (P2) darstellenden Riegel hat, ferner umfassend eine Getriebemotorgruppe (16) die für einen Drehantrieb mit einem Teil (21) gekoppelt ist, das an seiner Außenumfangsfläche einen Schraubensteg (22) und eine Abflachung (23) hat und das oberhalb des ersten Teiles (P1) in einem Bereich desselben angeordnet ist, in dem ein Betätigungsknopf (26) vorgesehen ist, der bei einer Drehung des genannten Teiles (21) im Bereich der Abflachung (23) nicht in Eingriff mit dem Teil (21) und im Bereich des Schraubensteges (22) in Eingriff mit dem Teil (21) steht, umfassend ferner ein mittels eines Schlüssels betätigbares Schloß (29) mit einer Riegelnase (30), das oberhalb des ersten Teiles (P1) in einem Bereich desselben angeordnet ist, in dem eine Kerbe (31) vorgesehen ist, die mit der Riegelnase (30) während eines Teiles der Drehung derselben zusammen wirkt, wobei der Schraubengang (22) einerseits und die Riegelnase (30) andererseits während ihrer Drehung das erste Teil (P1) zwischen der einen und der anderen der beiden Endstellungen des ersten Teiles (P1) bewegen.

## Claims

1. Apparatus for transforming an alternating rectilinear movement of a first component (P1) into an alternating rectilinear movement of a second component (P2) which is disposed transversely to the first component (P1), between two limit positions of each of said components, comprising three levers which each have two opposite ends each provided with a pivot axis, wherein:
- a first lever (A) is pivoted by a first end (a1) to the first component (P1) and by its second end (a2) to a first end (b1) of a second lever (B),
- a second lever (B) is a lever which is cranked at a point (s) intermediate of its length constituting an apex from which extend two limbs which form between them an obtuse angle of greater than 90° and smaller than 180°, one end (b1) of a limb of said second lever (B) being pivotally connected to the second end (a2) of the first lever (A), the other end (b2) of the second limb being pivoted to the second component (P2), and the point (s) being pivotally connected to a first end (c1) of the third lever (C),
- a third lever (C) is pivotally connected by a first end (c1) to the point (s) of the second lever (B) and its second end (c2) is pivotally connected to a fixed point (1) which is outside the first and the second components (P1, P2), said third lever (C) being in said obtuse angle when the second component (P2) is in its first limit position and being to the rear of the pivotal connection of the second lever (B) to the second component (P2) with respect to the direction of displacement of said second component (P2) from its first limit position to its second limit position.

2. Apparatus according to claim 1 characterised in that the limb of the second lever (B) which is between the second end (b2) and the intermediate apex point (s) of said lever is disposed perpendicularly to the second component (P2) when it is in its first limit position.

3. Apparatus according to either one of claims 1 and 2 characterised in that a fourth lever (D) is mounted between the first component (P1) and the first lever (A), said fourth lever (D) having two limbs with respect to a pivotal mounting point, thus permitting adaptation of the travel of the first component (P1) to the travel of the second component (P2) between their limit positions.

4. Apparatus according to any one of claims 1 to 3 characterised in that the first and second levers (A, B) are in the same plane or in adjacent parallel planes and the third lever (C) is curved in a semicircle overall between its two pivoted ends.

5. Apparatus according to claim 4 characterised in that the third lever (C) is curved in the same plane as the plane of the first and second levers (A, B) or in an adjacent parallel plane.

6. Apparatus according to claim 1 characterised in that the third lever (C) is curved in a semicircle between its two pivoted ends in a plane which substantially contains the first and second levers (A, B), the curvature of said lever (C) being selected so that the latter contains in its concavity the limb of the second lever (B), which is disposed between the apex (s) and the first end (b1) of said lever (B), at the same time as the second end (a2) of the first lever (A), when the second component (P2) is at its second limit position.

7. Use of the apparatus according to any one of claims 1 to 6 in a lock between an actuating bar constituting the first component (P1) and at least one bolt constituting the second component (P2).

8. A lock with electrical and mechanical actuation of a bolt at least characterised in that it comprises at least one apparatus according to any one of claims 1 to 6 between an actuating bar constituting a first component (P1) and a bolt constituting a second component (P2), further comprising a motor-reducing gear unit (16) coupled for rotary movement to a component (21) having a helical screwthread (22) at its periphery and a flat (23), said component (21) being disposed above the first component (P1) in a region thereof provided with an operating knob (26) disengaged from said component (21) opposite the flat (23) and co-operating with the helical screwthread (22) during the rotary movement of said component (21), also comprising a key-operated lock (29) with a bit (30) disposed above the first component (P1) in a region thereof provided with a notch (31) co-operating with the bit (30) during a fraction of the rotary movement of the latter, both of the helical screwthread (22) and the bit (30) during their rotary movement displacing the first canponent (P1) between one and other of the two limit positions thereof.
